# EUROPÄISCHE PATENTSCHRIFT

(11) **EP 2 219 923 B1**
(45) Veröffentlichungstag und Bekanntmachung des Hinweises auf die Patenterteilung: **26.12.2012**
(21) Anmeldenummer: 08804406.0
(22) Anmeldetag: 18.09.2008
(51) Int. Cl.: B60T 7/12, B60T 7/22, B62D 15/02

(54) **STEUEREINRICHTUNG**
CONTROL DEVICE
DISPOSITIF DE COMMANDE

(30) Priorität: 14.11.2007 DE 102007054397
(43) Veröffentlichungstag der Anmeldung: 25.08.2010
(73) Patentinhaber: Robert Bosch GmbH, 70442 Stuttgart (DE)
(72) Erfinder: KRAUTTER, Wolfgang, 71229 Leonberg (DE); SCHERL, Michael, 74321 Bietigheim (DE); GUENTHER, Clemens, 76275 Ettlingen (DE); HAUG, Matthias, 70469 Stuttgart (DE)
(86) Internationale Anmeldenummer: PCT/EP2008/062471
(87) Internationale Veröffentlichungsnummer: WO 2009/062772

(56) Entgegenhaltungen:
- EP-A- 1 241 064
- EP-A- 1 626 383
- WO-A-02/12011

## Beschreibung

### Stand der Technik

Die Erfindung geht aus von einer Steuervorrichtung für ein zumindest teilweise selbständiges Einparken eines Fahrzeugs nach Gattung des unabhängigen Anspruchs. Aus der DE 10 2004 017365 A1 ist bereits eine Einparkhilfe bekannt, bei der Abstandsmittel einen Abstand zwischen dem Fahrzeug und einem Hindernis erfassen. Eine Bremseinrichtung steuert bei Erreichen eines vorgegebenen Mindestabstandes zu einem Hindernis die Bremseinrichtung des Fahrzeugs derart an, dass das Fahrzeug vollständig abgebremst wird, wenn eine Fahrpedalauslenkung kleiner ist als ein vorgegebener Auslenkungsschwellwert. Aus der DE 103 400 14 A1 ist ein Verfahren und eine Anordnung zur Lenkung eines Kraftfahrzeugs beim Einparken bekannt.

Das Dokument EP 1 241 064 A2 ist der nächstliegende Stand der Technik und beschreibt alle Merkmale des Oberbegriffs des Anpruchs 1.

### Offenbarung der Erfindung

### Vorteile der Erfindung

Die erfindungsgemäße Steuereinrichtung für ein zumindest teilweise selbständiges Einparken eines Fahrzeugs mit den Merkmalen des unabhängigen Anspruchs hat demgegenüber den Vorteil, dass ein selbständiger Einparkvorgang bei einer Betätigung eines Fahrpedals unterbrochen wird. Dem Fahrer wird es somit ermöglicht, auf einfache Weise während eines automatischen Einparkvorgangs die Steuerung des Fahrzeugs selbst wieder zu übernehmen. Ein gesonderter Abbruch des Einparkvorgangs ist hierbei nicht erforderlich. Dem Fahrer wird es somit ermöglicht, auf einfache Weise auf Gefahren in der Umgebung des Fahrzeugs oder auch auf eine geänderte Einparksituation kurzfristig zu reagieren. Insbesondere für den Fall, dass das Fahrzeug in Ruhe ist, kann die Kontrolle über das Fahrzeug durch den Fahrer wieder auf einfache Weise übernommen werden. Ferner wird die Kontrolle des Fahrers über das Fahrzeug erhöht, auch bei einem zumindest teilweise selbständigen Einparkvorgang, den das Fahrzeug durchführt. Zudem wird auch die Akzeptanz eines zumindest teilweise selbständig durchgeführten Einparkvorgangs für einen Fahrzeugnutzer erhöht.

Durch die in den abhängigen Ansprüchen aufgeführten Maßnahmen sind vorteilhafte Weiterbildungen und Verbesserungen der in dem unabhängigen Anspruch angegebenen Steuereinrichtung möglich. Besonders vorteilhaft ist es, bei einer Unterbrechung des selbständigen Einparkens eine Bewegung des Fahrzeugs derart zu beeinflussen, dass eine Bewegung des Fahrzeugs in eine nicht gewünschte Fahrtrichtung unterbunden wird. Die Unterbindung einer Bewegung kann dabei beispielsweise durch einen Bremsvorgang oder durch eine Bereitstellung eines hinreichenden Drehmoments des Fahrzeugantriebs erfolgen. Hierdurch kann beispielsweise eine unbeabsichtigte Bewegung des Fahrzeugs bei einer Unterbrechung eines an einem Hang durchgeführten Einparkvorgangs verhindert werden.

Ferner ist es vorteilhaft, einen Abstand zu einem Hindernis in wenigstens einer Fahrtrichtung zu überwachen und den Fahrer bei einer Betätigung des Fahrpedals bei einem Unterschreiten eines vorgegebenen Abstands zu warnen. Damit kann verhindert werden, dass ein Fahrer, der die Steuerung des Fahrzeugs selbst wieder übernimmt, durch eine Betätigung des Fahrpedals das Fahrzeug zu einer Bewegung in Fahrtrichtung antreibt und dabei gegen das Hindernis stößt. Durch die Warnung wird er auf das Hindernis hingewiesen, so dass eine Kollision mit dem Hindernis vermieden werden kann.

Es ist ferner vorteilhaft, gegebenenfalls eine Unterbindung einer Fahrzeugbewegung dann durchzuführen, wenn das Fahrpedal betätigt wird und das Fahrzeug aus einem zumindest teilweise selbständig durchgeführten Einparkvorgang heraus nun von dem Fahrer selbst auf ein Hindernis gesteuert zu werden droht. Dies ist insbesondere dann vorteilhaft, wenn der Fahrer das Fahrpedal betätigt, während das Fahrzeug steht. Denn bei einem ruhenden Fahrzeug kann der Fahrer eine gewählte Fahrtrichtung des Fahrzeugs nicht intuitiv erfassen, so dass der möglicherweise über die eingestellte Fahrtrichtung des Fahrzeugantriebs bei einer Betätigung des Fahrpedals im Irrtum ist.

Um eine unnötige Warnung bzw. einen unnötigen Bremsvorgang zu verhindern, wird vorteilhaft eine Gangwahleinrichtung des Fahrzeugs abgefragt, um eine Fahrtrichtung des Fahrzeugs zu ermitteln und für denjenigen Fall und vorzugsweise nur für denjenigen Fall, dass in der gemäß der Gangwahleinheit eingestellten Fahrtrichtung sich ein Hindernis unterhalb eines vorgegebenen Abstandes befindet, eine Warnung des Fahrers vor dem Hindernis bzw. eine Unterbindung einer Fahrzeugbewegung automatisch erfolgt.

Ferner ist es vorteilhaft, den Fahrzeugantrieb nach einer Unterbrechung des zumindest teilweise selbständigen Einparkens entsprechend dem Wunsch des Fahrers und damit entsprechend einer Betätigung des Fahrpedals anzusteuern. Hierdurch kann ein für den Fahrer unmerklicher Übergang von der zumindest teilweise automatisch durchgeführten Steuerung des Fahrzeugs während des Einparkvorgangs auf eine von dem Fahrer selbst durchgeführte Steuerung des Fahrzeugs erfolgen.

Entsprechende Vorteile ergeben sich auch für ein Verfahren zur Beeinflussung eines zumindest teilweise selbständig von einem Fahrzeug durchgeführten Einparkvorgangs, wenn das Einparken bei einer Erfassung einer Betätigung des Fahrpedals unterbrochen wird. Entsprechend ist es auch vorteilhaft, das Fahrzeug bei einem Unterschreiten eines vorgegebenen Abstandes anzuhalten bzw. den Fahrer zu warnen.

Ferner ist es vorteilhaft, bei einer Betätigung einer Eingabeeinheit oder eine Betätigung des Fahrpedals über ein vorgegebenes Maß hinaus ein Anhalten des Fahrzeugs aufzuheben, so dass das Fahrzeug entsprechend dem Wunsch des Fahrers gesteuert werden kann. Dies ist insbesondere dann vorteilhaft, wenn eine Abstandsmessung gestört ist, beispielsweise durch eine Verschmutzung, oder wenn es sich bei dem erfassten Hindernis um ein überfahrbares Hindernis handelt, beispielsweise in den Fahrweg hineinragende dünne Äste.

### Kurze Beschreibung der Zeichnungen

Ausführungsbeispiele der Erfindung sind in den Zeichnungen dargestellt und in der nachfolgenden Beschreibung näher erläutert. Es zeigen:
- Figur 1: eine schematische Darstellung eines Fahrzeugs mit einer erfindungsgemäßen Steuereinrichtung in einer Aufsicht,
- Figur 2: ein Ausführungsbeispiel für einen erfindungsgemäßen Verfahrensablauf.

### Ausführungsformen der Erfindung

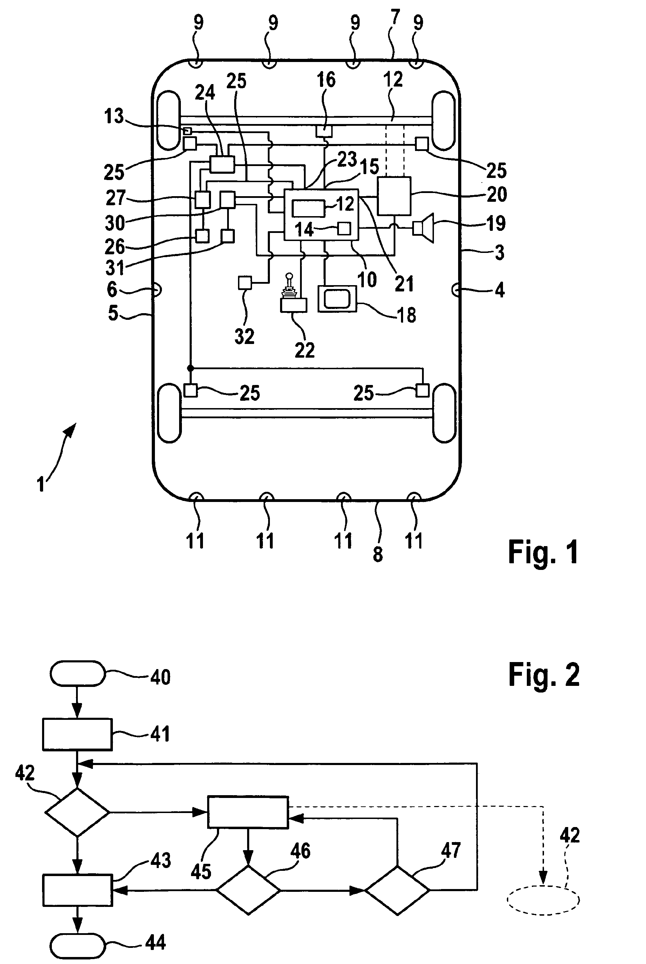

In der Figur 1 ist ein Fahrzeug 1 dargestellt, das über eine Steuereinrichtung 10 zur Durchführung eines zumindest teilweise selbständigen Einparkens verfügt. Zum Erfassen einer Parklücke sind Abstandssensoren an dem Fahrzeug 1 angeordnet. In der in der Figur 1 gezeigten Konfiguration ist an einer rechten Fahrzeugseite 3 ein Abstandssensor 4 angeordnet. An einer linken Fahrzeugseite 5 ist ein Abstandssensor 6 angeordnet. Die Abstandssensoren 4, 6 sind beispielsweise als Ultraschallsensoren ausgeführt. Ferner ist es aber auch möglich, Radarsensoren oder sonstige optische Sensoren, wie beispielsweise Kameras oder Lidarsensoren, zu verwenden. Entsprechend sind auch an einer Vorderseite 7 und an einer Rückseite 8 des Fahrzeugs Abstandssensoren 9 bzw. 11 angeordnet. In der hier gezeigten Konfiguration sind jeweils an der Vorderseite 7 vier Sensoren 9 und an der Rückseite 8 ebenfalls vier Sensoren 11 angeordnet. Entsprechend können an allen Fahrzeugseiten gegebenenfalls auch mehr bzw. an der Vorder- bzw. Rückseite auch weniger Sensoren vorgesehen sein. Die Abstandssensoren 4, 6, 9, 11 sind über in der Figur 1 nicht dargestellte Verbindungsleitungen, vorzugsweise über ein Datenbus-System, mit der Steuereinrichtung 10 verbunden.

Eine Recheneinheit 12 der Steuereinrichtung 10 wertet die von den Abstandssensoren 4, 6, 9, 11 beispielsweise in einem Echomess-Verfahren ermittelten Abstandswerte aus und verbindet die momentan gemessenen Abstandswerte, mit den Daten eines Wegsensors 13, der eine zurückgelegte Wegstrecke des Fahrzeugs ermittelt und der ebenfalls mit der Steuereinrichtung 10 verbunden ist. Indem an verschiedenen Streckenpunkten eines Fahrwegs des Fahrzeugs 1 Abstandswerte gemessen werden, ist die Steuereinrichtung 10 in der Lage, eine Umgebungskarte des Fahrzeugs zu erstellen. Insbesondere ist es damit möglich, durch einen Vergleich mit den in einem Speicher 14 in der Steuereinrichtung 10 abgelegten Fahrzeugdaten zu ermitteln, ob eine sich insbesondere seitlich neben dem Fahrzeug befindliche Parklücke dazu eignet, das Fahrzeug 1 in diese Parklücke zu bewegen.

Wurde eine entsprechende, freie Parklücke gefunden, so berechnet die Recheneinheit 12 einen Fahrweg, ausgehend von der aktuellen Position des Fahrzeugs in die Parklücke hinein. Die Steuereinrichtung 10 ist dazu ausgelegt, über eine Schnittstelle 15 zu einer Lenkansteuereinheit 16 eine Lenkachse 17 des Fahrzeugs so anzusteuern, dass sich das Fahrzeug entlang der berechneten Bahn bewegt. Anstelle einer vollautomatischen Durchführung des Einparkvorgangs können auch Teilaufgaben des Einparkvorgangs von dem Fahrer übernommen werden, beispielsweise eine Betätigung der Lenkung oder ein Geradeziehen des Fahrzeugs innerhalb der Parklücke.

Über eine Schnittstelle 21 ist die Steuereinrichtung 10 mit einem Fahrzeugantrieb 20 verbunden. Der Fahrzeugantrieb 20 wirkt auf eine Antriebsachse des Fahrzeugs ein, hier zugleich die Lenkachse 17, und beschleunigt das Fahrzeug in eine gewünschte Richtung. Eine Fahrtrichtungswahl erfolgt dabei über eine Gangwahleinheit 22, die entweder vom Fahrer oder auch von der Steuereinrichtung 10 betätigt wird. Um das Fahrzeug abzubremsen, verfügt die Steuereinrichtung 10 zudem über eine Schnittstelle 23 zu einem Bremsensteuergerät 24, mit dem Fahrzeugbremsen 25 angesteuert werden können. Somit ist es möglich, dass die Steuereinrichtung 10 entweder den Fahrzeugantrieb 20 oder die Lenkansteuereinheit 16 steuert. Ferner ist es auch im Rahmen eines automatischen Einparkens möglich, dass sowohl die Lenkansteuereinheit 16, als auch der Fahrzeugantrieb 20 und die Gangwahleinheit 22von der Steuereinrichtung 10 angesteuert werden, um das Fahrzeug entlang der berechneten Bahn in die Parklücke zu führen. Um auf Hindernisse während der Fahrt reagieren zu können, überwachen die Abstandssensoren 4, 6, 9, 11, während der Fahrt entlang der vorausberechneten Bahn die Umgebung des Fahrzeugs. Wird ein Hindernis erkannt, so wird entweder eine automatische Bremsung über die Fahrzeugsbremsen 25 veranlasst und/oder es wird eine Warnung über den Lautsprecher 19 bzw. die Anzeige 18 ausgegeben, so dass der Fahrer selber eine Bremsung vornehmen kann.

Betätigt der Fahrer ein Bremspedal 26, so wird diese Betätigung von einer Steuereinrichtung 27 erfasst. Hierbei wird sowohl das Bremsensteuergerät 24 angesteuert, so dass entsprechend dem Fahrerwunsch die Bremsen 25 das Fahrzeug bremsen. Ferner wird aber auch über eine Datenverbindung 28 eine Betätigung des Bremspedals der Steuereinrichtung 10 mitgeteilt, so dass die Geschwindigkeit des Fahrzeugs bei dem automatischen Einparken reduziert wird oder dass die Steuereinrichtung 10 den automatischen Einparkvorgang zumindest solange unterbricht, solange das Bremspedal betätigt wird.

Die Steuereinrichtung 10 ist mit einer Auswerteeinheit 30 für eine Betätigung des Fahrpedals 31 über eine Schnittstelle 29 verbunden. Die Auswerteeinheit 30 ist ferner auch mit dem Fahrzeugantrieb 20 verbunden. Erfolgt ein zumindest teilweise automatischer Einparkvorgang, so wird der Einparkvorgang bei einer Betätigung des Fahrpedals 31 unterbrochen. In einer ersten Ausführungsform kann der Einparkvorgang nach einem Loslassen des Fahrpedals wieder fortgesetzt werden. In einer weiteren Ausführungsform ist es für ein Fortführen des automatischen Einparkvorgangs insbesondere aus dem Stand erforderlich, dass ein Bedienelement 32 von dem Fahrer betätigt wird. Ferner ist es auch möglich, dass nach einer einmaligen Betätigung des Fahrpedals 31 das Fahrzeug nunmehr wieder durch den Fahrer gesteuert werden muss.

Wird während des zumindest teilweise selbständigen Einparkens das Fahrpedal 31 betätigt, so wird gemäß einer Ausführungsform gemäß dem Verfahren nach der Figur 2 vorgegangen. Ausgehend von einem Erfassungsschritt 40, in dem eine Betätigung des Fahrpedals 31 während eines zumindest teilweise selbständigen Einparkvorgangs erfasst wird, wird zu einem Abbruchschritt 41 verzweigt. In dem Abbruchsschritt 41 wird ein automatischer Eingriff der Steuereinrichtung auf den Fahrzeugantrieb 20 und/oder die Lenkansteuereinheit 16 abgebrochen. Anschließend wird zu einem ersten Prüfschritt 42 verzweigt. In dem ersten Prüfschritt 42 wird geprüft, ob sich in der Fahrtrichtung des Fahrzeugs ein Hindernis befindet, dessen Abstand zu dem Fahrzeug unterhalb eines vorgegebenen Abstandes liegt. Der vorgegebene Abstand ist beispielsweise ein Abstand zwischen einem und drei Metern. Die Fahrtrichtung des Fahrzeugs wird dabei durch eine Auswertung der eingelegten Fahrstufe bzw. des eingelegten Ganges des Fahrzeugs über eine Abfrage der Gangwahleinheit 22 von der Steuereinrichtung 10 abgefragt. Fährt das Fahrzeug nach vorne, so werden hierbei die an der Vorderseite 7 angeordneten Abstandssensoren 9 zu einer Messung angeregt. Fährt das Fahrzeug rückwärts, so werden die an der Rückseite 8 angeordneten Abstandssensoren 11 zu einer Messung angeregt. In einer anderen Ausführungsform können aber auch unabhängig von der eingelegten Gangwahlstufe stets beide Fahrtrichtungen nach vorne und nach hinten durch eine Aktivierung der Abstandssensoren an der Vorder- bzw. der Rückseite 7, 8 überwacht werden.

Wurde festegestellt, dass sich in der Fahrtrichtung des Fahrzeugs kein Hindernis befindet, so wird zu einem anschließenden Freigabeschritt 43 weiter verzweigt. In dem Freigabeschritt 43 wird eine Ansteuerverbindung von der Auswerteeinheit 30, mittels der einer Auslenkung des Fahrpedals 31 festgestellt wird, an den Fahrzeugantrieb 20 von der Steuereinrichtung 10 wieder freigegeben, so dass der Fahrzeugantrieb 20 entsprechend der Stellung des Fahrpedals 31 das Fahrzeug beschleunigt. Anschließend wird zu einem Endschritt 44 verzweigt, ab dem der Fahrer wieder die volle Kontrolle über das Fahrzeug hat und eine zumindest selbständige Steuerung des Fahrzeugbetriebs durch die Steuereinrichtung 10 beendet wird.

Wird in dem ersten Prüfschritt 42 dagegen festegestellt, dass in einer Fahrtrichtung des Fahrzeugs ein vorgegebener Abstand zu einem Hindernis vor bzw. hinter dem Fahrzeug unterschritten wird, so wird zu einem Ausgabeschritt 45 verzweigt. Der vorgegebene Abstand liegt beispielsweise in einem Bereich von 0,5m-3m und weist vorzugsweise einen Wert von 1m auf. In dem Ausgabeschritt 45 wird eine Warnung über die Anzeige 18 und/oder den Lautsprecher 19 an den Fahrer dahingehend ausgegeben, dass sich ein Hindernis vor bzw. hinter dem Fahrzeug befindet. Ferner wird eine Bewegung des Fahrzeugs unterbunden. Dies kann durch ein Einwirken der Steuereinrichtung auf die Bremseinrichtung und/oder den Fahrzeugantrieb erfolgen. Sollte sich das Fahrzeug bei einer Unterbrechung des Einparkvorgangs noch bewegen, so kann das Fahrzeug in einer Ausführungsform vorzugsweise in einer für die Insassen angenehmen Weise auch abgebremst werden.

In einer ersten Ausführungsform des Verfahrens wird nun entsprechend der gestrichelten Linie gemäß der Figur 2 von dem Ausgabeschritt 45 unmittelbar zu einem Endschritt 48 verzweigt, gemäß dem das Fahrzeug durch eine Betätigung der Fahrzeugbremsen angehalten wird. Die Betätigung der Fahrzeugbremsen wird von der Steuereinrichtung 10 über eine entsprechende Ansteuerung des Bremsensteuergeräts 24 veranlasst. Das Fahrzeug wird nunmehr an seiner aktuellen Position gehalten. Damit kann eine Kollision mit einem Hindernis vor bzw. hinter dem Fahrzeug verhindert werden.

Gemäß einer weiteren Ausführungsform wird von dem Ausgabeschritt 45 zu einem zweiten Prüfschritt 46 verzweigt. Gemäß dem zweiten Prüfschritt 46 wird die Stellung des Fahrpedals 31 überprüft. Wird das Fahrpedal 31 über ein vorgegebenes Maß hinaus betätigt, wird es also beispielsweise bis zu einem Anschlag des Fahrpedals 31 durchgetreten, so wird ebenfalls zu dem Freigabeschritt 43 verzweigt. Dem Fahrer wird damit die Möglichkeit gegeben, trotz eines erfassten Hindernisses das Fahrzeug in eine gewünschte Fahrtrichtung zu bewegen. Dies könnte insbesondere dann relevant sein, wenn die Sensoren beispielsweise in Form einer Verschmutzung oder einer Vereisung eine Störung aufweisen. Ferner ist es auch möglich, dass das erfasst Hindernis ohne weiteres überfahren werden kann, wie beispielsweise eine Papiertüte oder ein loser Ast, der in den Fahrweg des Fahrzeugs hineinragt. Alternativ zu einer Betätigung des Fahrpedals kann auch eine Betätigung der Eingabeeinheit 32 zur Freigabe eines Fahrens des Fahrzeugs entsprechend einer Betätigung des Fahrpedals ausgewertet werden.

Wird in dem zweiten Prüfschritt 46 keine Betätigung des Fahrpedals über ein vorgegebenes Maß hinaus erfasst, so wird von dem zweiten Prüfschritt 46 zu einem dritten Prüfschritt 47 verzweigt, in dem die Gangwahleinheit 22 nochmals abgefragt wird. Hatte der Fahrer nun die Fahrtrichtung geändert, beispielsweise von dem ersten Gang zu einen Rückwärtsgang, so wird zu dem ersten Prüfschritt 42 zurück verzweigt und es wird gegebenenfalls überprüft, ob sich auch in der nunmehr eingestellten Fahrtrichtung unterhalb des vorgegebenen Abstandes ein Hindernis befindet. Wurde die Fahrtrichtung jedoch nicht geändert, so wird von dem dritten Prüfstand 47 wieder zu dem Ausgabeschritt 45 zurück verzweigt und eine Bewegung des Fahrzeugs wird weiterhin unterbunden.

Anstelle einer Betätigung des Fahrpedals über ein vorgegebenes Maß kann in den zweiten Prüfschritt 46 auch eine längerfristige Betätigung des Fahrpedals, beispielsweise für einen Zeitraum von mehr als fünf Sekunden, als ein Maß für einen Wunsch des Fahrers angesehen werden, das Fahrzeug in die gewünschte Richtung zu bewegen.

## Patentansprüche

1. Steuereinrichtung für ein zumindest teilweise selbständiges Einparken eines Fahrzeugs mit einer Schnittstelle (21) zu einer Steuereinrichtung (20) zur Ansteuerung eines Fahrzeugantriebs zur Durchführung des zumindest teilweise selbständigen Einparkens und mit einer Schnittstelle (29) zu einer Auswerteeinheit (30) zur Erfassung einer Fahrpedalbetätigung, wobei das selbständige Einparken bei einer Erfassung einer Betätigung des Fahrpedals (31) unterbrochen wird, wobei eine Schnittstelle zu einer Abstandsmesseinrichtung (4, 6, 9, 11) vorgesehen ist zur Ausgabe einer Warnung bei einem Unterschreiten eines vorgegebenen Abstands zu einem Hindernis in wenigstens einer Fahrtrichtung des Fahrzeugs (1) bei einem Unterbrechen des selbständigen Einparkens durch eine Betätigung des
Fahrpedals (31), **dadurch gekennzeichnet dass**, eine Schnittstelle zu einer Gangwahleinheit (22) des Fahrzeugs vorgesehen ist zur Ermittlung einer Fahrrichtung des Fahrzeugs entsprechend dem gewählten Gang, wobei eine Ausgabe einer Warnung und/oder ein Unterbinden einer Bewegung des Fahrzeugs bei einem Unterschreiten eines vorgegebenen Abstands nur zu einem Hindernis in der ermittelten Fahrtrichtung des Fahrzeugs bei einem Unterbrechen des selbständigen Einparkens durch eine Betätigung des Fahrpedals (31) erfolgt.

2. Steuereinrichtung nach Anspruch 1, **gekennzeichnet durch** eine Schnittstelle (23) zu einer Bremseinrichtung (24, 25) des Fahrzeugs zum Unterbinden einer Bewegung des Fahrzeugs bei einer Unterbrechung des selbständigen Einparkens.

3. Steuereinrichtung nach einem der vorhergehenden Ansprüche, **gekennzeichnet durch** eine Schnittstelle zu einer Abstandsmesseinrichtung (4, 6, 9, 11) zur Ausgabe einer Warnung bei einem Unterschreiten eines vorgegebenen Abstands zu einem Hindernis in wenigstens einer Fahrtrichtung des Fahrzeugs (1) bei einem Unterbrechen des selbständigen Einparkens **durch** eine Betätigung des Fahrpedals (31).

4. Steuereinrichtung nach einem der vorhergehenden Ansprüche, **gekennzeichnet durch** eine Schnittstelle zu einer Abstandsmesseinrichtung (4, 6, 9, 11) zum Veranlassen einer Unterbinden einer Bewegung des Fahrzeugs bei einem Unterschreiten eines vorgegebenen Abstands zu einem Hindernis in wenigstens einer Fahrtrichtung des Fahrzeugs (1) bei einem Unterbrechen des selbständigen Einparkens **durch** eine Betätigung des Fahrpedals (31).

5. Steuereinrichtung nach Anspruch 3 oder 4, **gekennzeichnet durch** eine Schnittstelle zu einer Gangwahleinheit (22) des Fahrzeugs zur Ermittlung einer Fahrrichtung des Fahrzeugs entsprechend dem gewählten Gang, wobei eine Ausgabe einer Warnung und/oder einem Unterbinden einer Bewegung des Fahrzeugs bei einem Unterschreiten eines vorgegebenen Abstands nur zu einem Hindernis in der ermittelten Fahrtrichtung des Fahrzeugs bei einem Unterbrechen des selbständigen Einparkens **durch** eine Betätigung des Fahrpedals (31) erfolgt.

6. Steuereinrichtung nach einem der vorhergehenden Ansprüche, **gekennzeichnet durch** eine Schnittstelle zu einer Eingabeeinheit (32) zur Freigabe eines Fahrens des Fahrzeugs entsprechend einer Betätigung des Fahrpedals (31) bei einer Unterbrechung des selbständigen Einparkens **durch** eine Betätigung des Fahrpedals (31).

7. Verfahren zur Beeinflussung eines zumindest teilweise selbständig von einem Fahrzeug durchgeführten Einparkens, **dadurch gekennzeichnet, dass** das selbständige Einparken bei einer Erfassung einer Betätigung des Fahrpedals (31) unterbrochen wird, wobei eine Steuereinrichtung nach einem der vorhergehenden Ansprüche verwendet wird.

8. Verfahren nach Anspruch 7, **dadurch gekennzeichnet, dass** eine Bewegung des Fahrzeugs bei einem Unterbrechen des selbständigen Einparkens unterbunden wird.

9. Verfahren nach einem der Ansprüche 7-8, **dadurch gekennzeichnet, dass** bei einem Unterbrechen des selbständigen Einparkens ein Abstand zu einem Hindernis in einer Fahrtrichtung des Fahrzeugs (1) gemessen wird und dass bei einem Unterschreiten eines vorgegebenen Abstands zu dem Hindernis eine Warnung ausgegeben wird und/oder eine Bewegung des Fahrzeugs unterbunden wird.

10. Verfahren nach einem der Ansprüche 8-9, **dadurch gekennzeichnet, dass** bei einer Betätigung einer Eingabeeinheit (32) oder bei einer Betätigung des Fahrpedals (31) über ein vorgegebenes Maß hinaus ein Fahrzeugantrieb (20) des Fahrzeugs (1) entsprechend der Stellung des Fahrpedals (31) angesteuert wird.

## Claims

1. Control device for at least semi-automatically parking a vehicle with an interface (21) to a control device (20) for actuating a vehicle drive in order to carry out the at least semi-automatic parking, and having an interface (29) to an evaluation unit (30) for sensing activation of an accelerator pedal, wherein the automatic parking is interrupted when activation of the accelerator pedal (31) is sensed, wherein an interface to a distance measuring device (4, 6, 9, 11) is provided in order to output a warning when a predefined distance from an obstacle is undershot in at least one direction of travel of the vehicle (1) when the automatic parking is interrupted by activation of the accelerator pedal (31), **characterized in that** an interface to a gear speed selector unit (22) of the vehicle is provided in order to determine a direction of travel of the vehicle corresponding to the selected gear speed, wherein a warning is output and/or a movement of the vehicle is prevented when a predefined distance only from one obstacle is undershot in the determined direction of travel of the vehicle when the automatic parking is interrupted by activation of the accelerator pedal (31).

2. Control device according to Claim 1, **characterized by** an interface (23) to a brake device (24, 25) of the vehicle for preventing a movement of the vehicle when the automatic parking is interrupted.

3. Control device according to one of the preceding claims, **characterized by** an interface to a distance measuring device (4, 6, 9, 11) for outputting a warning when a predefined distance from an obstacle is undershot in at least one direction of travel of the vehicle (1) when the automatic parking is interrupted by activation of the accelerator pedal (31).

4. Control device according to one of the preceding claims, **characterized by** an interface to a distance measuring device (4, 6, 9, 11) for preventing a movement of the vehicle when a predefined distance from an obstacle is undershot in at least one direction of travel of the vehicle (1) when the automatic parking is interrupted by activation of the accelerator pedal (31).

5. Control device according to Claim 3 or 4, **characterized by** an interface to a gear speed selector unit (22) of the vehicle for determining a direction of travel of the vehicle corresponding to the selected gear speed, wherein a warning is output and/or a movement of the vehicle is prevented when a predefined distance only from one obstacle is undershot in the determined direction of travel of the vehicle when the automatic parking is interrupted by activation of the accelerator pedal (31).

6. Control device according to one of the preceding claims, **characterized by** an interface to an input unit (32) for enabling driving of the vehicle corresponding to activation of the accelerator pedal (31) when the automatic parking is interrupted by activation of the accelerator pedal (31).

7. Method for influencing parking which is carried out at least semi-automatically by a vehicle, **characterized in that** the automatic parking is interrupted when activation of the accelerator pedal (31) is sensed, wherein a control unit according to one of the preceding claims is used.

8. Method according to Claim 7, **characterized in that** a movement of the vehicle is prevented when the automatic parking is interrupted.

9. Method according to one of Claims 7 - 8, **characterized in that** when the automatic parking is interrupted, a distance from an obstacle in a direction of travel of the vehicle (1) is measured, and **in that** when a predefined distance from the obstacle is undershot, a warning is output and/or a movement of the vehicle is prevented.

10. Method according to one of Claims 8 - 9, **characterized in that** when an input unit (32) is activated and/or when the accelerator pedal (31) is activated beyond a predefined degree, a vehicle drive (20) of the vehicle (1) is actuated in accordance with the position of the accelerator pedal (31).

## Revendications

1. Dispositif de commande permettant de stationner de façon au moins en partie automatique un véhicule automobile et pourvu d'une interface (21) de dispositif de commande (20) permettant de commander un entraînement de véhicule automobile afin de le garer au moins en partie automatiquement ainsi que d'une interface (29) d'unité d'analyse (30) permettant de détecter l'actionnant d'une pédale d'accélérateur, le stationnement automatique étant interrompu en cas de détection d'un actionnement de la pédale d'accélérateur (31), une interface de dispositif de mesure de distance (4, 6, 9, 11) étant prévue pour émettre un signal d'avertissement lorsqu'une distance prédéfinie par rapport à un obstacle est franchie dans au moins une direction de conduite du véhicule automobile (1) en présence d'une interruption du stationnement automatique par actionnement de la pédale d'accélérateur (31), **caractérisé en ce qu'**une interface d'unité de sélection de vitesse (22) du véhicule automobile est prévue afin de déterminer une direction d'avancement du véhicule automobile en fonction de la vitesse sélectionnée, un avertissement étant émis et/ou le déplacement du véhicule automobile est entravé lorsqu'une distance prédéfinie est franchie uniquement par rapport à un obstacle se situant dans la direction d'avancement déterminée du véhicule automobile en présence d'une interruption du stationnement automatique par actionnant de la pédale d'accélérateur (31).

2. Dispositif de commande selon la revendication 1, **caractérisé par** la présence d'une interface (23) de dispositif de freinage (24, 25) du véhicule automobile permettant d'entraver un déplacement du véhicule automobile en présence d'une interruption du stationnement automatique.

3. Dispositif de commande selon l'une quelconque des revendications précédentes, **caractérisé par** la présence d'une interface de dispositif de mesure de distance (4, 6, 9, 11) permettant d'émettre un signal d'avertissement en cas de franchissement d'une distance prédéfinie par rapport à un obstacle dans au moins une direction d'avancement du véhicule automobile (1) en présence d'une interruption du stationnement automatique par actionnement de la pédale d'accélérateur (31).

4. Dispositif de commande selon l'une quelconque des revendications précédentes, **caractérisé par** la présence d'une interface de dispositif de mesure de distance (4, 6, 9, 11) permettant d'entraver un déplacement du véhicule automobile en cas de franchissement d'une distance prédéfinie par rapport à un obstacle dans au moins une direction d'avancement du véhicule automobile (1) en présence d'une interruption du stationnement automatique par actionnement de la pédale d'accélérateur (31).

5. Dispositif de commande selon la revendication 3 ou 4, **caractérisé par** la présence d'une interface de dispositif de sélection de vitesse (22) du véhicule automobile permettant de déterminer une direction d'avancement du véhicule automobile en fonction de la vitesse sélectionnée, un signal d'avertissement étant émis et/ou un déplacement du véhicule automobile étant entravé en cas de franchissement d'une distance prédéfinie uniquement par rapport à un obstacle situé dans la direction d'avancement déterminée du véhicule automobile en présence d'une interruption du stationnement automatique par actionnement de la pédale d'accélérateur (31).

6. Dispositif de commande selon l'une quelconque des revendications précédentes, **caractérisé par** la présence d'une interface d'unité de saisie (32) permettant d'autoriser le mouvement d'avancement du véhicule automobile en fonction de l'actionnement de la pédale d'accélérateur (31) en présence d'une interruption du stationnement automatique par actionnement de la pédale d'accélérateur (31).

7. Procédé permettant d'influer sur le stationnement au moins en partie automatique d'un véhicule automobile, **caractérisé en ce que** le stationnement automatique est interrompu lorsqu'un actionnement de la pédale d'accélérateur (31) est détecté, un dispositif de commande selon l'une quelconque des précédentes revendications étant utilisé.

8. Procédé selon la revendication 7, **caractérisé en ce qu'**un déplacement du véhicule automobile est entravé en cas d'interruption du stationnement automatique.

9. Procédé selon l'une quelconque des revendications 7 à 8, **caractérisé en ce qu'**en cas d'interruption du stationnement automatique, la distance par rapport à un obstacle est mesurée dans une direction d'avancement du véhicule automobile (1) et qu'un signal d'avertissement est émis et/ou qu'un déplacement du véhicule automobile est entravé en cas de franchissement d'une distance prédéfinie par rapport à l'obstacle.

10. Procédé selon l'une quelconque des revendications 8 à 9, **caractérisé en ce qu'**en cas d'actionnement d'une unité de saisie (32) ou qu'en cas d'actionnement de la pédale d'accélérateur (31), un entraînement de véhicule automobile (20) du véhicule automobile (1) est commandé selon une ampleur prédéfinie en fonction de la position de la pédale d'accélérateur (31).
